# NEW EUROPEAN PATENT SPECIFICATION

(11) **EP 0 363 608 B2**
(45) Date of publication and mention of the opposition decision: **28.07.2004**
(45) Mention of the grant of the patent: 26.01.1994
(21) Application number: 89115230.8
(22) Date of filing: 18.08.1989
(51) Int. Cl.: C08L 69/00, C08K 5/52, C08K 5/53

(54) **Polymer mixture comprising an aromatic polycarbonate, a styrene-containing copolymer and/or graft polymer and a phosphate based flame-retardant; articles formed therefrom**
Polymer-Mischung aus einem aromatischen Polycarbonat, einem Styrol enthaltenden Copolymer und/oder Pfropfpolymer und einem Flammschutzmittel auf der Basis eines Phosphats, geformte Gegenstände daraus
Mélange de polymères comprenant un polycarbonate aromatique, un copolymère et/ou polymère greffé contenant du styrène et un ignifugeant à base de phosphate, articles formés à partir de ce mélange

(30) Priority: 22.09.1988 NL 8802346
(43) Date of publication of application: 18.04.1990
(73) Proprietor: GENERAL ELECTRIC COMPANY, Schenectady, N.Y. 12151 (US)
(72) Inventor: Gosens, Johannes Cornelis, NL-4600 AC Bergen op Zoom (NL); Savenije, Herman Bernard, NL-4600 AC Bergen op Zoom (NL); Pratt, Charles Franklin, NL-4600 AC Bergen op Zoom (NL); Claesen, Christianus Adrianus Arnoldus, NL-4600 AC Bergen op Zoom (NL)
(74) Representative: Gesthuysen, von Rohr & Eggert

(56) References cited:
- EP-A- 0 005 053
- EP-A- 0 034 697
- EP-A- 0 103 230
- EP-A- 0 103 231
- EP-A- 0 174 493
- EP-A- 0 206 058
- GB-A- 2 043 083
- JP-A- 59 024 736
- JP-A- 59 045 351
- JP-A- 63 117 057
- JP-A- 63 227 632
- US-A- 3 987 008
- US-A- 4 078 016
- US-A- 4 223 100
- US-A- 4 966 814
- PATENT ABSTRACTS OF JAPAN, Vol 9, Nr 71, 30 March 1985 page (C272)[1794]; & JP-A-59 202 240

## Description

Polymer mixture comprising an aromatic polycarbonate, a styrene-containing copolymer and/or graft polymer, a phosphate based flame-retardant and a further flame-retardant; articles formed therefrom.

The invention relates to a polymer mixture which comprises an aromatic polycarbonate (A), a copolymer and/or a graft polymer containing styrene and/or alpha-methyl-styrene and/or a styrene substituted with one or more halogen atoms or with organic groups in its aromatic nucleus (B), a phosphate based flame-retardant (C), and a further flame-retardant (D).

Polymer mixtures which comprise an aromatic polycarbonate, a styrene-containing graft polymer, for example, ABS, and a flame-retardant are known, for example, from EP-A-0174493. According to this prior art a monophosphate ester, for example, triphenyl phosphate, tricresyl phosphate, diphenylcresyl phosphate, and the like, is used as a flame-retardant. The known polymer mixture moreover must comprise a halogen compound and a tetrafluoroethylene polymer which is applied in a very special manner. Monophosphate esters tend to migrate to the surface when the mixture is injection moulded causing the so-called juicing. In order to obtain a V-0 rating according to UL-94 one has either to use the monophosphates in combination with other flame retardants or in relatively high concentrations causing a decrease of the heat resistance of the mixture.

EP-A-0206058 describes polymer mixtures which comprise an aromatic polycarbonate, a styrene maleic anhydride copolymer, an alkyl- or arylphosph(on)ate and a mixture of a tetrafluoroethylene polymer and a styrene-containing graft polymer. This known polymer mixture may moreover comprise a halogen compound. Here again there are only described monophosphates causing the above mentioned disadvantages.

DE-A-2921325 describes polymer mixtures which comprise an aromatic polycarbonate and a diphosphate compound derived from pentaerythritol. These known polymer mixtures may moreover comprise an ABS and a halogen compound. The use of the described diphospates causes some problems since they tend to delamination at higher concentrations in view of their poor solubility. Above they have too little plasticizing effect. Their flame retardant properties are such that at least 20% by weight is needed in non-halogene comprising PC-ABS blends in order to obtain a V-0 rating at 1.6 mm.

EP-A-0103230 describes polymer mixtures comprising a specific type of polycarbonate, a styrene copolymer and/or graft polymer and a branched polyphosphate flame retardant. The branched polyphosphates have a polycondensation degree of 3-10, with respect to the phosphate groups in the polyphosphate. Polycondensation degrees of 4-25 are preferrred, from 7-20 even more preferred. A good rating for the flame retardancy could be obtained with said polyphosphates by either adding a second flame retardant or by using them in relatively big amounts (about 30% by weight).

The invention is based on the discovery that the incorporation of specific oligomeric phosphates and a further flame-retardant as will be described here below results in a polymer mixture having at moderate levels of phosphate, in the absence of other flame retardants, a V-0 rating at 1.6 mm, not showing a tendency to juicing and being plastified to the desired degree. Above the polymer mixture of the invention has a good weld line strength and a good retention of heat resistance. The present invention refers to a polymeric mixture according to claim 1.

The polymer mixture according to the invention comprises as a phosphate based flame retardant an oligomeric phosphate or a blend of oligomeric phosphates with the formula 1 of claim 1, wherein R₁, R₂, R₃, and R₄, each represent an aryl which may be substituted with halogen atoms or alkylgroups chosen independently of each other and wherein X is an arylene group, m₁, m₂, M₃, and M₄, each independently of each other are 0 or 1 and N has an average value of 1.2 - 1.7.

Generally the above described flame retardants and a suitable process for their manufacture have been described in JP-A-202240/1984. According to this prior art said flame retardants may be used in admixture with thermoplastic resins. As a possible resin mention is made of polycarbonate. It could however not be foreseen that the above described flame retardants would offer the above described advantages in polymer mixtures comprising an aromatic polycarbonate and a styrene copolymer and/or styrene graft copolymer.

The phosphate based flame-retardant (C) is used in a quantity of 1-25, more preferably in a quantity of 5-20 parts by weight per hundred parts by weight of aromatic polycarbonate (A) plus styrene copolymer and/or styrene graft polymer (B). In order to obtain optimal flame-retarding properties it is necessary to use comparatively large quantities of the flame-retardant (C). Such quantities are however lower than those required for the phosphates used in the above described prior art.
The flame-retardant (C), i.e. the above-mentioned oligomeric phosphate is used in combination with one or more other agents which may ensure improvement of the flame-retarding properties. For that purpose is used one or more of the following constituents (D):
- a salt having flame-retarding properties for aromatic polycarbonates and/or
- a halogen-containing low-molecular weight compound and/or high-molecular weight polymer and/or
- a perfluoroalkane polymer and/or
- a metal compound acting as a synergist.

The polymer mixture according to the invention preferably comprises as a graft polymer the product obtained by grafting a mixture of (1) styrene and/or alphamethyl styrene and/or a styrene substituted with one or more halogen atoms or with organic groups in the aromatic nucleus and (2) a methacrylonitrile and/or acrylonitrile and/or maleic anhydride and/or a derivative of maleic anhydride and/or acrylic monomer on a rubber (3).

The polymer mixture according to the invention may comprise as a styrene-containing copolymer a copolymer built up from (1) styrene, and/or alpha-methyl styrene and/or a styrene substituted with one or more halogen atoms or with organic groups in the aromatic nucleus and (2) a methacrylonitrile and/or acrylonitrile and/or maleic anhydride and/or derivative of maleic anhydride and/or acrylic monomer.

The polymer mixture according to the invention may comprise a mixture of a styrene copolymer and a styrene graft polymer as described hereinbefore.

The invention also relates to articles formed from the polymer mixture according to the invention.

The polymer mixture according to the invention comprises 5-95% by weight, more preferably 10-90% by weight of constituent A and 95-5% by weight, more preferably 90-10% by weight of constituent B per 100 parts by weight of (A)+(B).

The polymer mixture according to the invention comprises at any rate the following constituents as defined in claim 1:
A. an aromatic polycarbonate and
B. a styrene-containing copolymer and/or a styrene-containing graft polymer,
C. an oligomeric phosphate as a phosphate based flame retardant, and
D. one or more further flame-retardants as defined above.
   The polymer mixture according to the invention may comprise moreover one or more of the following constituents:
E. conventional additives.

### A. Aromatic polycarbonates

Aromatic polycarbonates are materials known per se. They are generally prepared by reacting a dihydric phenol compound with a carbonate precursor, for example, phosgene, a halogen formiate or a carbonate ester. Aromatic polycarbonates are polymers which comprise units of the formula 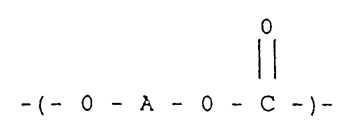 wherein A is a bivalent aromatic radical which is derived from the dihydric phenol used in the preparation of the polymer. Dihydric phenols which may be used in the preparation of the aromatic polycarbonates are mononuclear or polynuclear aromatic compounds which comprise two hydroxy radicals each directly bonded to a carbon atom of an aromatic nucleus. Said dihydric phenols may be substituted with one or more halogene atoms or one or more alkylgroups.

Branched polycarbonates known per se, as described, for example in US-A-4,001,184, are also suitable.

Suitable aromatic polycarbonates are also the so-called polyester carbonates which are obtained by performing the polymerisation reaction in the presence of an ester precursor, for example, a difunctional carboxylic acid, for example, terephthalic acid or an ester-forming derivative thereof. These polyester carbonates have ester bonds and carbonate bonds in the polymeric chain. Polyester carbonates are described, for example, in US-A-3,169,121.

It is also possible to use a mixture of various polycarbonates.

### 8. Copolymers and/or a graft polymer containing styrene and/or alpha-methyl-styrene and/or a styrene substituted with one or more halogen atoms or with organic groups in its aromatic nucleus

Suitable styrene-containing copolymers and suitable styrene-containing graft polymers are described, for example, in EP-A-0174493.

Styrene-containing copolymers are copolymers built up from units derived from (1) styrene, and/or alpha-methyl styrene and/or styrene compounds substituted with one or more halogene atoms or with organic groups in the aromatic nucleus and/or methylmethacrylate and from (2) acrylonitrile and/or methacrylonitrile and/or maleic anhydride and/or a derivative of maleic acid anhydride and/or acrylic monomer. Suitable derivatives of maleic anhydride are maleimide and N-substituted maleimids, such as N-phenyl maleimide. Suitable acrylic monomers are, for example, methyl methacrylate, (meth)acrylic acid. These copolymers are known per se and they can be obtained according to conventional methods of preparing copolymers.

Styrene-containing graft polymers are obtained by grafting a mixture of at least two monomers on a rubber. Examples of suitable rubbers are polybutadiene, butadiene-styrene copolymers. Other rubbers, for example, acrylate rubbers and EPDM rubbers are also to be considered. A mixture of monomers is then grafted on these rubbers. Suitable monomers are indicated here above in conjunction with the description of the styrene copolymer.

### C. Oligomeric phosphates

The polymer mixture of the invention comprised an oligomeric phosphate with a formula 1, as shown in claim 1. In said formula R₁, R₂, R₃, and R₄, each represent an aryl or an alkarylgroup chosen independently of each other and X is an arylene group, m₁, m₂, M₃, and M₄, each independently of each other are 0 or 1 and N has an average value of 1.2 to 1.7.

Phosphates properly speaking are those compounds for which m₁, m₂, m₃, and m₄, are all equal to one. The term "phosphates" is however used throughout this description and in the claims to include compounds for which one or more of m₁, m₂, m₃, and m₄, are equal to zero.

The oligomeric phosphates as used in the polymer mixture according to the invention are used in the form of a blend of several different oligomers.

The aryl groups R₁, R_{2,} R₃ and R₄ may be substituted with halogen atoms or alkyl groups. The aryl group preferably is a cresyl group and/or phenyl group and/or xylenyl group and/or is a propylphenyl group and/or butylphenyl group and/or a brominated or chlorinated derivate thereof. The arylene group is a group derived from a dihydric compound, for example, resorcinol, hydroquinone, bisphenol A and chlorides and bromides thereof. These compounds are known per se.

The preferably used oligomeric phosphate is an oligomeric phosphate of formula 1, or a blend of such phosphates, wherein m₁, m₂, m₃, and m₄, are all equal to 1, R₁, R₂, R₃, and R₄ all represent a phenyl group. X represents a phenylene group and N has an average value of 1.2 to 1.7.

### D. Further flame-retardants

In addition to the above phosphates or phosphonates the polymer mixture according to the invention also comprises further agents to improve the flame retarding properties:
- a salt having flame-retarding properties for aromatic polycarbonates and/or
- a halogen-containing low-molecular weight compound and/or high-molecular weight polymer and/or
- a perfluoroalkane polymer and/or
- a metal compound active as a synergist.

Salts having flame-retarding properties are generally known and are used on a large scale in polymer mixtures which comprise a polycarbonate. All salts which are suitable for polymer mixtures having a polycarbonate may be used in the polymer mixture according to the invention. In particular may be mentioned organic and inorganic sulphonates, for example, sodium trichlorobenzene sulphonate, salts of sulphone sulphonates, for example, the potassium salt of diphenylsulphone sulphonate, salts of perfluorinated alkane sulphonic acid and sodium aluminium hexafluoride.

Examples of suitable halogen-containing compounds are decabromodiphenyl ether, octabromodiphenyl, octabromodiphenyl ether and further oligomeric or polymeric bromine compounds, for example, derived from tetrabromobisphenol A or also polyphenylene ethers brominated in the nucleus.

The salts mentioned hereinbefore are to be preferred. The addition or particularly small quantities from 0.01-0.5 parts by weight already provides a strongly noticeable effect.

Tetrafluoroethylene polymers are preferably used as perfluoroalkane polymers. The polymer mixture according to the invention may further comprise a metal or metal compound active as a synergist, for example, antimony oxide and the like. These synergists are usually used in combination with halogen-containing compounds.

### E. Conventional additives

In addition to the constituents mentioned hereinbefore the polymer mixture according to the invention may comprise one or more conventional additives, for example, fillers, reinforcing fibres, stabilisers, pigments and dyes, plasticisers, mould release agents and antistatically active agents.

The polymer mixture can be obtained according to the conventional techniques of preparing polymer mixtures, for example, by compounding the said constituents in an extruder.

The polymer mixture according to the invention preferably comprises the said constituents in the following relative quantities:

Per 100 parts by weight of constituents A + B the polymer mixture according to the invention comprises
D. up to 20 parts by weight of one or more further agents to improve the flame-retarding properties as defined above and optionally
E. 0-100 parts by weight of conventional additives.

The following constituents were used in the examples hereinafter:
- PC-1:: an aromatic polycarbonate derived from bisphenol A and phosgene having an intrinsic viscosity of 49 ml/g measured in methylene chloride at 25°C.
- PC-2:: an aromatic polycarbonate having an intrinsic viscosity of 55 ml/g.
- ABS-1 :: a graft copolymer, built up substantially from a butadiene rubber on which styrene and acrylonitrile have been grafted, with a rubber-content of approximately 30%.
- ABS-2 :: a graft copolymer built up substantially from a butadiene rubber on which styrene and acrylonitrile have been grafted with a rubber content of approximately 70%.
- ABS-3 :: a similar product as AES-1 and ABS-2 with a rubber content of approximately 50%.
- Phosphate-1 :: a mixture of several oligomeric phosphates with formula 1, wherein R₁, R₂, R₃ and R₄ represent a phenyl-group, m₁, m₂, m₃, and m₄ are all 1, X is a phenylene group and N has an average value of about 1.4.
- Phosphate-2 :: a mixture of several oligomeric phosphates with the same structure as phosphate-1, but with an average value of N of approximately 2.8 (comparative).
- TPP-1:: triphenyl phosphate
- TPP-2:: a 40/60 blend of triphenylphosphate and tris-isopropylphenylphosphate.
- BR-PC :: a polymeric polycarbonate having units derived from tetrabromobisphenol A and from bisphenol A, with a bromine content of about 25%
- Teflon®: a tetrafluoropolyethylene
- STB :: the sodium salt of trichlorobenzene sulphonate.
- SAN:: a styrene-acrylonitrile copolymer with a molecular weight of about 100.000 and a styrene to acrylonitrile ratio of about 72 to 28.

### Examples A, B and I-III

Four different polymer mixtures were prepared from the above-mentioned constituents in the quantities as indicated in the following table. For that purpose the indicated constituents were compounded in an extruder. The resulting extrudate was then pelletised. Standardised test rods were injection-moulded from the pellets to determine the properties. The properties found are also recorded in the following table A:

**Table A:**

| Example No. | A | B | I | II | III |
|---|---|---|---|---|---|
| Composition (parts by weight) | | | | | |
| PC-1 | 75 | 64.5 | 64.5 | 64.5 | 58.5 |
| ABS-1 | 25 | 25 | 25 | 25 | 25 |
| Phosphate-1 | - | - | 10 | 10 | 10 |
| TPP-1 | - | 10 | - | - | - |
| Teflon | - | 0.5 | 0.5 | 0.5 | 0.5 |
| STB | - | 0.02 | - | 0.02 | - |
| Br.PC | - | - | - | - | 6 |

| Properties | | | | | |
|---|---|---|---|---|---|
| o UL-rating ¹⁾ (1.6 mm) | HB | V-1 | V-2 | V-0 | V-0 |
| o Vicat ²⁾ (°C) | 133 | 89 | 95 | 95 | 96 |
| o Juicing ³⁾ | + | - | + | + | + |

| | | | | | |
|---|---|---|---|---|---|
| 1) The UL-rating has been determined according to Underwriters Laboratory. (UL-94) | | | | | |
| 2) Determined according to ASTM D1525, | | | | | |
| 3) Juicing: + = no deposition of phosphates on the surface - = deposition of phosphates on the surface. | | | | | |

It may be seen from the above results that polycarbonate/ABS mixtures have a reasonable heat distortion temperature (Vicat value). The addition of a phosphate leads to a considerable reduction thereof (compare examples A and B). The polymer mixture according to the invention (examples I, II and III) has a more favourable Vicat value as compared to example B. The polymer mixture according to Example 1 has a reasonable flame-extinction (V-2). A considerable improvement of the flame-retarding properties (V-O) occurs by the addition of an extremely small quantity of salt (example II). This effect occurs to a far lesser extent when the same salt is used in combination with triphenyl phosphate (TPP) (example B). In order to obtain a rating V-0 it is possible to use the phosphate in combination with a bromine compound (example III)

As shown in the following examples it is possible to obtain a V-0 rating by using the oligomeric phosphate alone or in combination with a halogene containing flame retardant.

### Examples C,D, IV and V

Polymer mixtures with a composition as shown in table B were prepared by compounding in an extruder. The measured properties are also recorded in table B.

**Table B.**

| Example no. | IV | C | V | D |
|---|---|---|---|---|
| Composition (parts by weight) | | | | |
| PC-1 | - | - | 79 | 79 |
| PC-2 | 68 | 68 | - | - |
| ABS-2 | - | - | 9 | 9 |
| ABS-3 | 10 | 10 | - | - |
| SAN | 15 | 15 | - | - |
| Phosphate-1 | 7 | - | 12 | - |
| TPP-2 | - | 7 | - | 12 |
| Br-PC | 10 | 10 | - | - |
| Teflon | 0.3 | 0.3 | 0.2 | 0.2 |

| Properties | | | | |
|---|---|---|---|---|
| UL94 rating at 1.6 mm⁽¹⁾ | V-0 | V-0 | V-0 | V-0 |
| Vicat⁽²⁾ (°C) | 114 | 108 | 98 | 92 |
| Juicing⁽³⁾ | not tested | not tested | + | - |
| (1), (2), (3) see notes under Table A. | | | | |

As can be seen it is possible (example V) to obtain a V-0 rating with the oligomeric phosphates, at a relatively low content (12 parts ty weight). In case a higher vicat temperature is required one may use a lower concentration of the oligomeric phosphate in combination with a bromine flame retardant (example IV). The oligomeric phosphate does not cause juicing at the concentrations required for obtaining a V-0 rating.

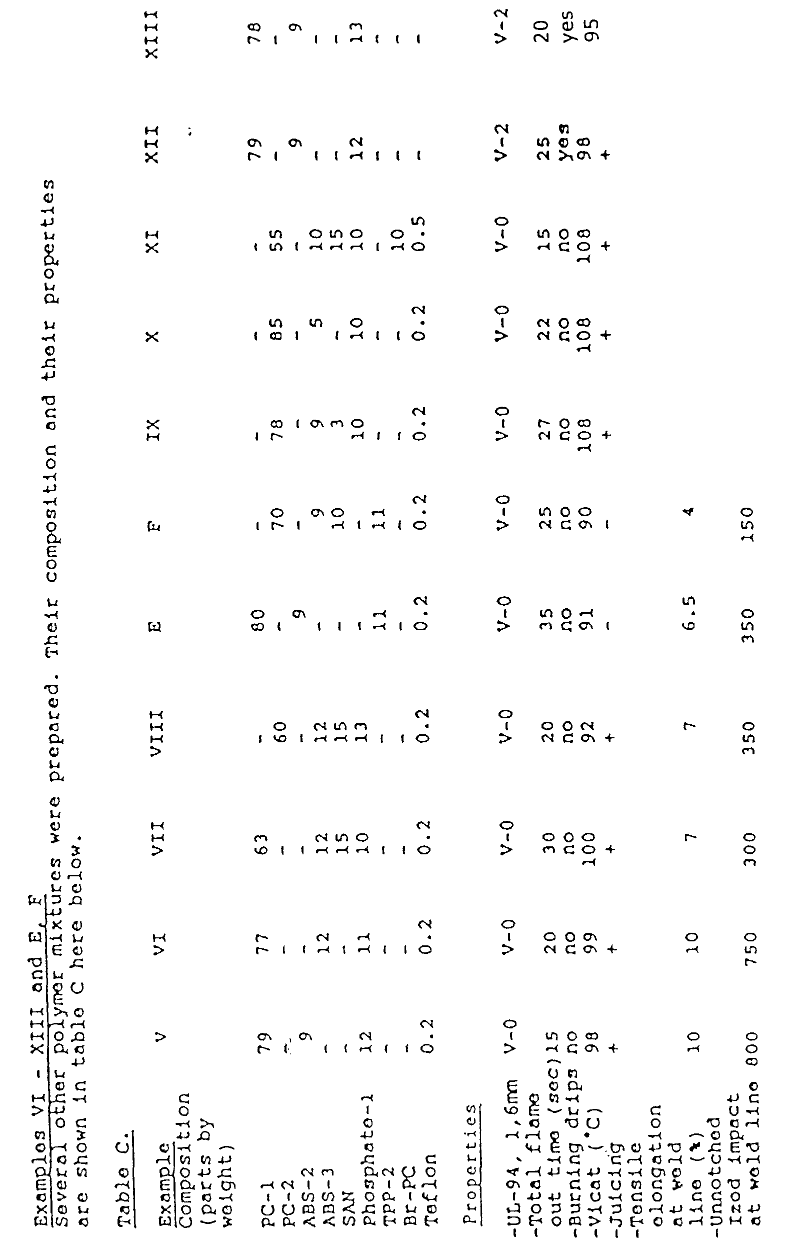

In table C the composition and the properties of the polymer mixture according to example V have also been listed. A test piece was prepared out of the polymer mixtures according to examples V-VIII and E and F by means of injection moulding with a double gate. At the weld line the elongation and the unnotched Izod impact were determined. By comparing Example F (comparative example) with example VIII and by comparing example E (comparative example) with example V one can easily see that the polymer mixture according to the invention shows an improved weld line strength due to the presence of an oligomeric phosphate instead of a monophosphate.

### Examples XIV - XV and G

Three more examples were prepared, corresponding in composition with example V with the exception of the used phosphates. The used phosphates and the properties are recorded in tabel D herebelow.

**Table D.**

| Example | XVI | XVII * | G |
|---|---|---|---|
| Phosphate used | phosphate-1 | phosphate-2 | TPP-1 |

| Properties | | | |
|---|---|---|---|
| UL-94, 1.6 mm | V-0 | HB | V-0 |
| | | | |
| average flame out time (sec) | 1-6 | 14-16 | 1-7 |
| | | | |
| Maximum single flame out time (sec) | 7 | 60 | 9 |
| | | | |
| Melt viscosity at 250°C for different shear rates : | | | |
| 115 per sec. | 450 | 653 | 300 |
| 1150 per sec. | 230 | 319 | 185 |
| 2300 per sec. | 181 | 250 | 160 |
| | | | |
| Jucing | + | + | - |
| | | | |
| Vicat (°C) | 98 | 115 | 85 |

| | | | |
|---|---|---|---|
| *Comparative | | | |

As can be seen from the results of table D the flame retardant properties of the oligomeric phosphates decrease rapidly upon increasing the average value of n from 1.4 (phosphate-1) to 2.8 (phosphate-2). The plasticizing effect also decreases dramatically.

## Claims

1. A polymer mixture which comprises:
(A) 5-95 % by weight, calculated with respect to the sum of the quantities of (A) and (B), of an aromatic polycarbonate;
(B) 95-5 % by weight, calculated with respect to the sum of the quantities of (A) and (B), of a copolymer and/or graft copolymer containing styrene and/or α-methylstyrene and/or a styrene substituted with one or more halogen atoms or with organic groups in its aromatic nucleus;
(C) as flame-retardant 1-25 parts by weight, calculated per 100 parts by weight of (A) + (B), of an oligomeric phosphate or a blend of oligomeric phosphates with the following formula 1 : 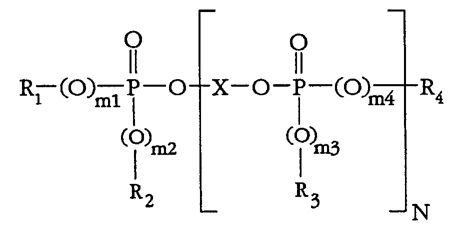 wherein R₁, R₂, R₃, and R₄, each represent an aryl which may be substituted with halogen atoms or alkyl groups chosen independently of each other and wherein X is an arylene group, m₁, m₂, m₃ and m₄, each independently of each other, are 0 or 1 and wherein N has an average value of 1.2 to 1.7; and
(D) one or more of the following flame retardants:
- a salt having flame-retarding properties for aromatic polycarbonates and/or
- a halogen-containing low-molecular weight compound and/or high-molecular weight polymer and/or
- a perfluoralkane polymer and/or
- a metal compound active as a synergist,
namely in an amount of up to 20 parts by weight, calculated per 100 parts by weight of (A) + (B).

2. A polymer mixture as claimed in claim 1, **characterised in that** the polymer comprises an oligomeric phosphate of formula 1, or a blend of such phosphates, wherein m₁, m₂, m₃ and m₄ are all equal to 1; R₁, R₂, R₃ and R₄ all represent a phenyl group; and X represents a phenylene group.

3. A polymer mixture according to claim 1, **characterised in that** the mixture comprises as constituent (B) a graft copolymer built up from a rubber backbone upon which have been grafted styrene, α-methylstyrene, a styrene substituted with one or more halogen atoms or with organic groups in its aromatic nucleus, methylmethacrylate or a blend thereof and acrylonitrile, methacrylonitrile, methylmethacrylate, maleic anhydride, N-substituted maleinimide or a blend thereof.

4. A polymer mixture according to claim 1, **characterised in that** the mixture comprises as constituent (B) a copolymer of styrene, α-methylstyrene, a styrene substituted with one or more halogen atoms or with organic groups in its aromatic nucleus, methylmethacrylate or a blend thereof and acrylonitrile, methacrylonitrile, methylmethacrylate, maleic anhydride, N-substituted maleinimide or a blend thereof.

5. A polymer mixture according to claim 1, **characterised in that** the mixture comprises as constituent (B) a blend of a graft copolymer as defined in claim 3 and a copolymer as defined in claim 4.

6. A polymer mixture according to claim 1, **characterised in that** the mixture comprises 5-20 parts by weight of constituent (C) per 100 parts by weight of (A) + (B).

7. A polymer mixture as claimed in claim 1, **characterised in that** the polymer mixture comprises the oligomeric phosphate (C) in combination with a salt having flame-retarding properties for aromatic polycarbonate.

8. A polymer mixture as claimed in claim 1, **characterised in that** the polymer mixture moreover comprises a perfluoroalkane polymer.

9. Articles formed from the polymer mixture as claimed in claim 1.

## Patentansprüche

1. Polymermischung, die enthält:
(A) 5-95 Gew.%, berechnet unter Bezug auf die Summe der Mengen von (A) und (B), eines aromatischen Polycarbonats;
(B) 95-5 Gew.%, berechnet unter Bezug auf die Summe der Mengen von (A) und (B), eines Copolymers und/oder Pfropfcopolymers enthaltend Styrol und/oder alpha-Methylstyrol und/oder ein Styrol substituiert mit einem oder mehreren Halogenatomen oder mit organischen Gruppen in seinem aromatischen Kern;
(C) als flammhemmendes Mittel 1-25 Gewichtsteile, berechnet pro 100 Gewichtsteile (A) und (B), eines oligomeren Phosphats oder einer Mischung aus oligomeren Phophaten mit der folgenden Formel 1: 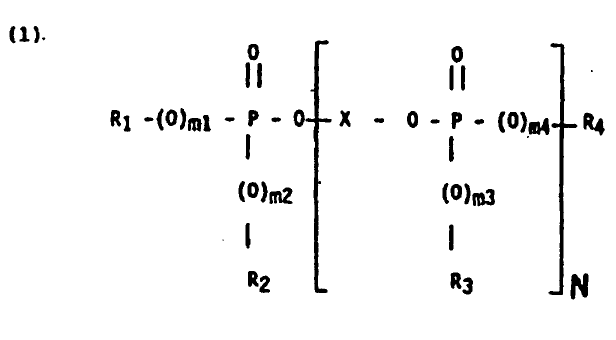 worin R₁, R₂, R₃ und R₄ jeweils ein Aryl repräsentieren, welches mit Halogenatomen oder Alkylengruppen substituiert sein kann, die unabhängig voneinander ausgewählt sind, und worin X eine Arylengruppe ist, m₁, m₂, m₃, und m₄ jeweils unabhängig voneinander 0 oder 1 sind, und worin N einen durchschnittlichen Wert von 1,2 bis 1,7 aufweist; und
(D) ein oder mehrere der folgenden flammhemmenden Mittel
- ein Salz mit flammhemmenden Eigenschaften für aromatische Polycarbonate und/oder
- eine halogenhaltige niedermolekulare Verbindung und/oder hochmolekulares Polymer und/oder
- ein Perfluoralkanpolymer und/oder
- eine Metallverbindung, die als Synergist wirksam ist,
nämlich in einer Menge von bis zu 20 Gewichtsteilen, berechnet pro 100 Gewichtsteile (A) und (B).

2. Polymermischungen nach Anspruch 1, **dadurch gekennzeichnet, dass** das Polymer ein oligomeres Phosphat der Formel 1, oder eine Mischung solcher Phosphate umfasst, worin m₁, m₂, m₃, und m₄ alle gleich 1 sind, R₁, R₂, R₃, und R₄ alle eine Phenylgruppe darstellen und X eine Phenylengruppe ist.

3. Polymermischungen nach Anspruch 1, **dadurch gekennzeichnet, dass** die Mischung als Bestandteil (B) ein Pfropfcopolymer umfasst, welches aufgebaut ist aus eine Gummihauptkette, auf der Styrol, alpha-Methylstyrol, ein Styrol substituiert mit einem oder mehreren Halogenatomen oder mit organischen Gruppen in seinem aromatischen Kern, Methylmethacrylat oder eine Mischung derselben und Acrylnitril, Methacrylnitril, Methylmethacrylat, Maleinsäureanhydrid, N-substituiertes Maleinimid, oder eine Mischung derselben, aufgepfropft ist.

4. Polymermischungen nach Anspruch 1, **dadurch gekennzeichnet, dass** die Mischung als Bestandteil (B) ein Copolymer des Styrols, alpha-Methylstyrols, ein Styrol substituiert mit einem oder mehreren Halogenatomen oder mit organischen Gruppen in seinem aromatischen Kern, Methylmethacrylat oder eine Mischung desselben und Acrylnitril, Methacrylnitril, Methylmethacrylat, Maleinsäureanhydrid, N-substituiertes Maleinimid oder eine Mischung derselben umfasst.

5. Polymermischungen nach Anspruch 1, **dadurch gekennzeichnet, dass** die Mischung als Bestandteil (B) eine Mischung eines Pfropfcopolymeren wie sie in Anspruch 3 definiert ist und ein Copolymer, wie es in Anspruch 4 definiert ist, umfasst.

6. Polymermischungen nach Anspruch 1, **dadurch gekennzeichnet, dass** die Mischung 5-20 Gewichtsteile des Bestandteils (C) pro 100 Gewichtsteile von (A) und (B) umfasst.

7. Polymermischungen nach Anspruch 1, **dadurch gekennzeichnet, dass** die Polymermischung das oligomere Phosphat (C) in Kombination mit einem Salz, welches flammhemmende Eigenschaften für aromatisches Polycarbonat besitzt, enthält.

8. Polymermischungen nach Anspruch 1, **dadurch gekennzeichnet, dass** die Polymermischung, darüber hinaus ein Perfluoralkanpolymer enthält.

9. Gegenstände, die aus der Polymermischung nach Anspruch 1 ausgeformt sind.

## Revendications

1. Mélange de polymères comprenant :
A) 5 à 95 % en poids, par rapport au total des quantités des composants (A) et (B), d'un polycarbonate aromatique ;
A) 95 à 5 % en poids, par rapport au total des quantités des composants (A) et (B), d'un copolymère et/ou d'un copolymère greffé contenant des motifs dérivés de styrène et/ou d'α-méthylstyrène et/ou d'un dérivé de styrène dont le noyau aromatique porte en tant que substituants un ou plusieurs atomes d'halogène ou groupes organiques ;
C) comme agent ignifugeant, 1 à 25 parties en poids, pour 100 parties en poids du total des composants (A) et (B), d'un phosphate oligomère ou d'un mélange de phosphates oligomères de formule 1 suivante : 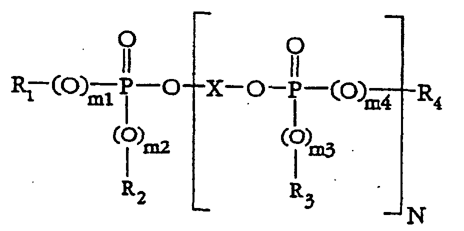 dans laquelle R₁, R₂, R₃ et R₄ représentent chacun un groupe aryle qui peut porter, en tant que substituants, des atomes d'halogène ou des groupes alkyle choisis indépendamment les uns des autres, X représente un groupe arylène, m1, m2, m3 et m4 représentent chacun, indépendamment les uns des autres, le nombre 0 ou 1, et N vaut en moyenne de 1,2 à 1,7 ;
D) et un ou plusieurs des agents ignifugeants suivants :
- un sel doté de caractéristiques ignifugeantes pour des polycarbonates aromatiques,
- et/ou un composé halogéné à bas poids moléculaire et/ou un polymère à haut poids moléculaire,
- et/ou un polymère de type perfluoroalcane,
- et/ou un composé métallique à effet synergique,
présents en une quantité qui peut aller jusqu'à 20 parties en poids, pour 100 parties en poids du total des composants (A) et (B).

2. Mélange de polymères conforme à la revendication 1, **caractérisé en ce que** ce mélange de polymères contient un phosphate oligomère de formule 1 dans laquelle m1, m2, m3 et m4 représentent tous le nombre 1, R₁, R₂, R₃ et R₄ représentent tous un groupe phényle et X représente un groupe phénylène, ou un mélange de tels phosphates.

3. Mélange de polymères conforme à la revendication 1, **caractérisé en ce que** ce mélange de polymères contient, en tant que composant (B), un copolymère greffé constitué d'un squelette de caoutchouc sur lequel ont été greffés du styrène, de l'α-méthylstyrène, un dérivé de styrène dont le noyau aromatique porte en tant que substituants un ou plusieurs atomes d'halogène ou groupes organiques, ou du méthacrylate de méthyle, ou un mélange de ces monomères, ainsi que de l'acrylonitrile, du méthacrylonitrile, du méthacrylate de méthyle, de l'anhydride maléique ou un dérivé N-substitué de maléimide, ou un mélange de ces monomères.

4. Mélange de polymères conforme à la revendication 1, **caractérisé en ce que** ce mélange de polymères contient, en tant que composant (B), un copolymère de styrène, d'α-méthylstyrène, d'un dérivé de styrène dont le noyau aromatique porte en tant que substituants un ou plusieurs atomes d'halogène ou groupes organiques, ou de méthacrylate de méthyle, ou d'un mélange de ces monomères, et d'acrylonitrile, de méthacrylonitrile, de méthacrylate de méthyle, d'anhydride maléique ou d'un dérivé N-substitué de maléimide, ou d'un mélange de ces monomères.

5. Mélange de polymères conforme à la revendication 1, **caractérisé en ce que** ce mélange de polymères contient, en tant que composant (B), un mélange d'un copolymère greffé du type défini dans la revendication 3 et d'un copolymère du type défini dans la revendication 4.

6. Mélange de polymères conforme à la revendication 1, **caractérisé en ce que** ce mélange de polymères contient de 5 à 20 parties en poids de composant (C) pour 100 parties en poids du total des composants (A) et (B).

7. Mélange de polymères conforme à la revendication 1, **caractérisé en ce que** ce mélange de polymères contient un phosphate oligomère (C) en combinaison avec un sel doté de caractéristiques ignifugeantes pour des polycarbonates aromatiques.

8. Mélange de polymères conforme à la revendication 1, **caractérisé en ce que** ce mélange de polymères contient en outre un polymère de type perfluoroalcane.

9. Articles formés d'un mélange de polymère conforme à la revendication 1.
